Europäisches Patentamt

(19) European Patent Office

Office européen des brevets

(11) Numéro de publication : **0 004 808**
B1

(12) **FASCICULE DE BREVET EUROPÉEN**

(45) Date de publication du fascicule du brevet :
17.06.81

(21) Numéro de dépôt : 79400192.5

(22) Date de dépôt : 26.03.79

(51) Int. Cl.³ : **C 04 B 35/71**, C 04 B 35/64,
C 04 B 41/14// C25B11/00,
C25B1/04

(54) Procédé de préparation d'une pièce en céramique et ensemble cathode-électrolyte solide obtenu par ce procédé.

(30) Priorité : 30.03.78 FR 7809253

(43) Date de publication de la demande :
17.10.79 (Bulletin 79/21)

(45) Mention de la délivrance du brevet :
17.06.81 Bulletin 81/24

(84) Etats contractants désignés :
DE GB SE

(56) Documents cités :
FR - A - 1 475 529
DE - A - 1 952 155
FR - A - 2 012 417
IBM TECHNICAL DISCLOSURE BULLETIN,
Vol. 12, n° 11, avril 1970, New York (USA)
D.A. CHANGE « Green ceramic metallization »
page 1795.

IBM TECHNICAL DISCLOSURE BULLETIN,
Vol. 13, n° 1, juin 1970, New York (USA)
C.H. KERCSMAN et al. « Producing Conductor
Lines », page 164.

(73) Titulaire : **COMMISSARIAT A L'ENERGIE ATOMIQUE**
Etablissement de Caractère Scientifique Technique
et Industriel
B.P. 510
F-75752 Paris Cedex 15 (FR)

(72) Inventeur : Francois, Bernard
61, Le Hameau Fleuri
F-38330 Montbonnot (FR)
Inventeur : Vigule, Jean-Claude
La Pra Herbeys
F-38320 Eybens (FR)

(74) Mandataire : Mongredien, André et al
c/o Brevatome 25, rue de Ponthieu
F-75008 Paris (FR)

EP 0 004 808 B1

Imprimerie Jouve, 17, rue du Louvre, 75001 Paris, France

## Procédé de préparation d'une pièce en céramique et ensemble cathode-électrolyte solide obtenu par ce procédé

La présente invention a pour objet un procédé de préparation d'une pièce en céramique comportant sur sa surface des inclusions de matériau conducteur de l'électricité, une telle pièce étant utilisable notamment pour constituer la cathode et l'électrolyte solide d'une cellule d'électrolyse de la vapeur d'eau à haute température destinée à la production d'hydrogène gazeux.

On sait que, compte tenu de l'importance des besoins en hydrogène dans l'industrie chimique, on a développé récemment des techniques de production d'hydrogène par électrolyse de la vapeur d'eau à haute température dans des cellules comprenant un électrolyte solide généralement constitué par une céramique conductrice des ions oxygène, disposé entre deux électrodes qui jouent respectivement le rôle d'anode et de cathode.

Dans ces cellules, la vapeur d'eau est introduite à une température d'environ 760-950 °C dans la partie cathodique de la cellule et elle est réduite en hydrogène gazeux à la surface de l'électrolyte solide quand on applique aux bornes de la cellule une tension de l'ordre de grandeur du volt.

On a constaté que dans une cellule de ce type, la production d'hydrogène gazeux dépend en particulier de la structure de la cathode qui doit être poreuse et qu'elle augmente, avec le nombre de « points triples » c'est-à-dire le nombre de points de contact entre l'électrolyte solide, la cathode et la vapeur d'eau qui circule dans le compartiment cathodique.

Pour obtenir cette grande densité de « points triples », on utilise actuellement des ensembles cathode-électrolyte solide tels que celui décrit dans le brevet français 2.012.417. De tels ensembles sont constitués par une couche d'électrolyte solide sur laquelle est appliquée une couche de cermet poreux dont les particules de métal constituent la cathode de la cellule.

Cependant, de tels ensembles ont l'inconvénient de ne pas posséder des propriétés satisfaisantes de résistance mécanique car ils sont soumis, dans les conditions de fonctionnement de la cellule, à des sollicitations mécaniques dues en particulier à la différence de dilatation entre les deux couches.

On connaît également des procédés de fabrication de pièces de céramique comportant des inclusions d'un matériau conducteur de l'électricité façonnées en un seul processus opératoire, ce qui évite par conséquent l'apparition de contraintes entre l'électrolyte solide et le matériau conducteur.

On trouvera un exemple d'un tel procédé connu dans le brevet français 1.513.898, pour « anodes métalliques pour piles à combustibles galvaniques à haute température à électrolyte solide et procédé pour leur fabrication », déposé au nom de « S.A. Brown Boveri et Cie. ». Comme on s'en rend compte, en particulier à la lecture des exemples donnés dans ce brevet, on répartit sur l'électrolyte solide une couche de mélange d'un matériau conducteur, d'électrolyte solide, et d'un porogène. La proportion en volume du porogène utilisé, ici du carbonate d'ammonium, pour réaliser ce mélange, n'est dans aucun des exemples cités, inférieure à 50 %. Plusieurs inconvénients résultent de l'utilisation de ce porogène. D'une part, il constitue une gêne pour la circulation des gaz. Un coefficient de diffusion naît de cette barrière supplémentaire, ce qui limite la densité de courant superficiel. D'autre part, un tel procédé conduit à une température de frittage qui ne saurait être inférieure à 1 600 °C, ainsi que le précise le brevet français 1.513.898 (page 2, colonne 1). Cette température prohibe, par conséquent, l'emploi d'un métal tel que le nickel, dont la température de fusion est de 1 455 °C.

On connaît également par l'article de I.B.M. Technical Disclosure Bulletin, vol. 12, n° 11, April 1970, p. 1 795, un procédé de métallisation d'objets en céramique, qui consiste à co-fritter un substrat en céramique crue et du molybdène ou du tungstène appliqué sous forme de pâte sur celui-ci, ce qui permet d'obtenir une pièce présentant des propriétés mécaniques satisfaisantes.

Cependant, aucun des procédés précités ne conduit à des pièces présentant une grande densité de points triples et des propriétés mécaniques satisfaisantes.

La présente invention remédie à ces inconvénients. Elle a pour objet un procédé de préparation d'une pièce en céramique comportant, affleurant sa surface, des inclusions de matériau conducteur de l'électricité. De ce fait, il n'est pas nécessaire de recourir à l'utilisation d'un porogène pour créer des points triples, nécessaires, comme on l'a vu précédemment, au bon fonctionnement de la cathode. Par ailleurs, la pièce obtenue selon le procédé de l'invention présente des propriétés satisfaisantes de stabilité et de résistance aux sollicitations mécaniques, notamment pour une utilisation comme cathode associée à un électrolyte solide dans une cellule d'électrolyse de la vapeur d'eau à haute température.

Le procédé de fabrication d'une pièce en céramique comportant, affleurant à sa surface, des inclusions de matériau conducteur de l'électricité, se caractérise en ce qu'il consiste à déposer, sur le fond d'un moule une petite quantité de particules dudit matériau conducteur, à disposer par-dessus de la poudre de céramique, et à comprimer l'ensemble formé par ladite poudre et lesdites particules, puis à le fritter à une température inférieure à la température de fusion dudit matériau conducteur.

De préférence, le matériau conducteur utilisé est constitué par des particules de nickel et l'ensemble obtenu par compression simultanée de ces particules de nickel et de poudre de céramique est fritté à une température de 1 300 °C.

Le procédé tel que caractérisé ci-dessus tire avantageusement profit du fait qu'en réalisant le frittage d'une ébauche de la pièce dans laquelle ont été réparties, aux endroits voulus, des particules de matériau conducteur de l'électricité, on parvient à réaliser simultanément une densification satisfaisante de la céramique et une stabilisation des particules de matériau conducteur de l'électricité, qui sont ainsi solidement fixées à la céramique aux endroits voulus.

Aussi, le procédé de l'invention est particulièrement. adapté à la réalisation d'un ensemble cathode-électrolyte solide pour cellule d'électrolyse de la vapeur d'eau à haute température. En effet, en préparant l'ébauche à partir d'une poudre de céramique susceptible de constituer un électrolyte solide et en répartissant de façon appropriée dans la couche superficielle de l'ébauche des particules de matériau conducteur de l'électricité, on peut obtenir directement par frittage une pièce en électrolyte solide comportant sur sa surface des particules de matériau conducteur de l'électricité réunies entre elles pour former un réseau cathodique conducteur.

Selon un mode de mise en œuvre du procédé de l'invention, particulièrement avantageux pour la réalisation d'un ensemble cathode-électrolyte solide par cellule d'électrolyse de la vapeur d'eau à haute température, on répartit dans la couche superficielle de ladite ébauche, des particules dudit matériau en quantité telle qu'on obtienne après frittage, une pièce comportant sur sa surface des inclusions de matériau conducteur de l'électricité réunies entre elles de façon à former à la surface de ladite pièce un réseau conducteur de l'électricité.

Ce mode de mise en œuvre du procédé de l'invention permet ainsi d'obtenir directement un ensemble cathode-électrolyte solide dans lequel la cathode est formée, lors du frittage, par la réunion des particules métalliques qui restent ainsi solidement fixées dans la céramique constituant l'électrolyte solide.

Selon un autre mode de mise en œuvre du procédé de l'invention, on soumet la pièce obtenue, après frittage, à un traitement complémentaire qui consiste à former sur ladite pièce au contact desdistes inclusions un revêtement de matériau conducteur de l'électricité selon un tracé déterminé.

Ce traitement complémentaire est notamment effectué lorsque la quantité de particules de matériau conducteur de l'électricité répartie à la surface de la pièce n'est pas suffisante pour former lors du frittage des inclusions métalliques réunies entre elles sous la forme d'un réseau conducteur.

Dans ce cas, les inclusions métalliques constituent les points de fixation d'un dépôt conducteur mince et souple qui est déposé ensuite sur la pièce selon un tracé déterminé afin de former sur cette dernière un réseau cathodique conducteur de l'électricité solidement ancré dans la couche superficielle de la pièce.

Ce traitement complémentaire peut être réalisé par exemple en déposant sur la totalité de la surface de la pièce comportant les inclusions une couche mince de matériau conducteur de l'électricité et en éliminant ensuite certaines parties de ladite couche par photogravure.

Selon une caractéristique du procédé de l'invention, les particules de matériau conducteur de l'électricité sont sous la forme de billes ou de fines particules et elles ont de préférence une dimension comprise entre 3 et 30 $\mu$.

Selon une autre caractéristique du procédé de l'invention, la poudre de ladite céramique a de préférence une dimension de particules voisine de 0,02 $\mu m$, c'est-à-dire une surface spécifique au moins égale à 50 $m^2/g$.

Lorsque le procédé de l'invention est destiné à la réalisation de pièces utilisables comme cathode associée à un électrolyte solide pour cellule d'électrolyse de la vapeur d'eau, la céramique est une céramique conductrice des ions oxygène, constituée de préférence par un oxyde ou un mélange d'oxydes conducteurs ioniques tels qu'un mélange d'oxyde de zirconium et d'oxyde d'yttrium.

Dans ce cas, le matériau conducteur de l'électricité est constitué par un métal, un alliage ou un composé métallique capable de fixer momentanément l'hydrogène. A titre d'exemple, ce matériau peut être constitué par du nickel.

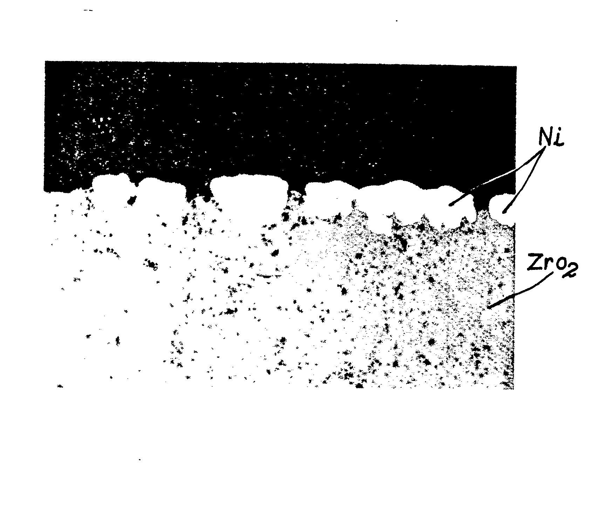

L'invention sera mieux comprise à la lecture des exemples suivants donnés bien entendu à titre illustratif et non limitatif et se référant au dessin annexé qui est une microphotographie d'une pièce obtenue par le procédé de l'invention.

Exemple 1

Cet exemple concerne la préparation de disques de 15 g en zircone yttriée comportant sur l'une de leurs faces des inclusions de nickel, à une densité superficielle de 10 mg/cm².

On part d'une poudre de nickel tamisée dans l'acétone entre 10 et 30 $\mu m$.

On disperse et on dépose par décantation sur la surface d'un disque en acier ayant une épaisseur de 15 mm et un diamètre de 130 mm, 0,6 g environ de cette poudre de nickel.

On dispose le disque en acier sur le piston inférieur d'une presse de façon que la surface recouverte de nickel se situe à quelques millimètres sous la surface de la table et on dispose au-dessus de la poudre de nickel 15 g d'une poudre de zircone yttriée (0,09 $Y_2O_3$-0,91 $ZrO_2$, concentration molaire) ayant une surface spécifique d'au moins 50 m²/g et tamisée à une dimension d'agrégats de particules inférieure ou égale à 0,160 mm, en déposant délicatement la poudre de zircone sur le dépôt initial de nickel.

A l'aide d'une réglette, on arase avec soin la poudre de zircone, puis on comprime le mélange de poudre sous une pression de 2 t/cm².

On obtient ainsi un disque comprimé qui constitue l'ébauche de la pièce, ce disque présentant sur l'une de ses faces une couche superficielle dans laquelle sont réparties des particules de nickel.

On place ensuite ce disque comprimé sur un support plan en alumine ou en molybdène en recouvrant d'une poudre granulée ou d'un disque intercalaire en magnésie la face du disque qui comporte les particules de nickel.

On peut empiler plusieurs disques de cette façon, en disposant ensuite un poids d'environ 500 g sur le sommet de l'empilement pour lutter contre des déformations éventuelles au cours du frittage. On réalise ensuite le frittage des disques en plaçant l'empilement de disques disposé sur le support plan dans un four dans lequel circule un courant d'hydrogène gazeux. On porte l'empilement dans le four à une température de 1 300 °C en le chauffant à une vitesse de 100 °C/h et on le maintient à cette température pendant 8 heures environ.

On obtient ainsi des disques frittés susceptibles d'être utilisés comme électrolyte solide associé à une cathode en nickel dans une cellule d'électrolyse à haute température.

En se reportant à la figure annexée qui est une microphotographie d'une coupe du disque ainsi obtenu, on voit que les grains de nickel sont implantés à la surface de la pièce.

Une mesure de la résistance superficielle des disques montre que la face des disques qui comporte les inclusions de nickel est conductrice. Par ailleurs, en raison de l'irrégularité du réseau conducteur formé par les inclusions de nickel, ces disques comportent un grand nombre de points de contact entre le nickel et la céramique, soit un grand nombre de points triples.

Ce nombre peut être caractérisé par la pente de la courbe intensité-potentiel pour $i = 0$. Pour obtenir cette courbe on mesure l'intensité qui passe dans le matériau en fonction du potentiel qui lui est appliqué. Au voisinage de $i = 0$, la pente de la courbe obtenue donne une approximation du nombre de points triples qui est d'autant plus grand que $\Delta i$ est plus élevé pour un $\Delta e$ donné. Pour des pressions partielles égales d'eau et d'hydrogène, la valeur rapportée à 1 cm$^2$ est inférieure à 100 $\Omega$.

### Exemple 2

Cet exemple concerne la préparation de disques de 15 g en zircone yttriée comportant sur l'une de leurs faces 5 mg/cm$^2$ d'inclusions de nickel.

Pour cette préparation, on suit le même mode opératoire que celui de l'exemple 1, la seule différence étant que l'on disperse sur la surface du disque en acier, seulement 0,3 g de poudre de nickel.

Les conditions de pression pour la fabrication de l'ébauche et les conditions de frittage sont identiques à celles de l'exemple 1.

Après frittage, on constate que la face des disques qui comporte les inclusions de nickel n'est pas conductrice, c'est-à-dire que ces inclusions ne sont pas réunies entre elles pour former un réseau conducteur.

Dans ce cas, on forme un réseau conducteur en déposant ensuite sous vide sur la face du disque fritté comportant les inclusions de nickel, une couche de nickel d'une épaisseur d'environ 2 $\mu$m. On élimine ensuite certaines parties de cette couche pour former un réseau conducteur en utilisant la technique de photogravure. Ainsi, on forme sur la couche de nickel un dessin ayant la forme d'une grille de période 10 $\mu$ et on révèle ensuite ce dessin au moyen de chlorure ferrique.

La couche obtenue reste liée aux ponts de nickel implantés dans la céramique. A cause de sa minceur, elle est souple et n'impose pas de contraintes mécaniques insupportables pour le disque d'électrolyte lors des cyclages thermiques intervenant en cours d'utilisation (0 à 850 °C).

On note que dans ces deux exemples, le nickel présent à la surface de la pièce forme une structure poreuse.

### Revendications

1. Procédé de fabrication d'une pièce en céramique comportant, affleurant à sa surface, des inclusions de matériau conducteur de l'électricité, caractérisé en ce qu'il consiste à disposer, sur le fond d'un moule, une petite quantité de particules dudit matériau, à disposer par dessus de la poudre de céramique et à comprimer l'ensemble formé par ladite poudre et lesdites particules, puis à le fritter à une température inférieure à la température de fusion dudit matériau conducteur, la quantité de particules dudit matériau conducteur disposées sur le fond du moule étant telle qu'on obtienne après frittage, une pièce comportant sur sa surface des inclusions de matériau conducteur de l'électricité réunies entre elles de façon à former a la surface de ladite pièce un réseau conducteur de l'électricité.

2. Procédé de fabrication d'une pièce en céramique comportant, affleurant à sa surface, des inclusions de matériau conducteur de l'électricité, caractérisé en ce qu'il consiste à disposer sur le fond d'un moule, une petite quantité dudit matériau, à disposer par dessus de la poudre de céramique et à comprimer l'ensemble formé par ladite poudre et lesdites particules, puis à le fritter à une température inférieure à la température de fusion dudit matériau conducteur, et à former ensuite sur ladite pièce au contact desdites particules un revêtement de matériau conducteur de l'électricité présentant un tracé déterminé.

3. Procédé selon la revendication 2, caractérisé en ce qu'on forme ledit revêtement présentant un tracé déterminé en déposant sur toute la surface de ladite pièce une couche dudit matériau et en éliminant ensuite certaines parties de ladite couche par photogravure.

4. Procédé selon l'une quelconque des revendications 1 à 3, caractérisé en ce que le matériau conducteur est constitué par des particules de nickel et en ce que l'ensemble obtenu par compression simultanée de ces particules de nickel et de la poudre de céramique, est fritté à une température de 1 300 °C.

5. Procédé selon l'une quelconque des revendications 1 à 4, caractérisé en ce que ladite céramique est une céramique conductrice des ions oxygène.

6. Procédé selon la revendication 5, caractérisé en ce que ladite céramique est constituée par un mélange d'oxydes conducteurs ioniques.

7. Procédé selon la revendication 6, caractérisé en ce que ladite céramique est un mélange d'oxyde de zirconium et d'oxyde d'yttrium.

8. Procédé selon l'une quelconque des revendications 1 à 7, caractérisé en ce que ledit matériau conducteur de l'électricité est un métal, un alliage ou un composé susceptible de fixer momentanément l'hydrogène.

9. Procédé selon l'une quelconque des revendications 1 à 8, caractérisé en ce que les particules dudit matériau conducteur de l'électricité ont une dimension comprise entre 3 et 30 $\mu$m.

10. Procédé selon l'une quelconque des revendications 1 à 9, caractérisé en ce que la poudre de ladite céramique a une surface spécifique au moins égale à 50 m²/g.

**Claims**

1. A process for the production of a ceramic member having inclusions of electrically conductive material flush with its surface, characterised in that it comprises depositing on the bottom of a mould a small number of particles of said conductive material, placing above said particles the ceramic powder and compressing together the aggregate formed by the powder and the particles, followed by sintering at a temperature below the melting temperature of the conductive material, the quantity of particles of said conductive material deposited on the bottom of the mould being such that, after sintering, a member is obtained having on its surface inclusions of electrically conductive material joined together in such a way as to form on the surface of said member an electrically conductive network.

2. A process for the production of a ceramic member having inclusions of electrically conductive material flush with its surface, characterised in that it comprises depositing on the bottom of a mould a small number of particles of said conductive material, placing above said particles the ceramic powder and compressing together the aggregate formed by the powder and the particles, followed by sintering at a temperature below the melting temperature of the conductive material, and forming a layer of electrically conductive material having a predetermined path on the said member in contact with the said particles.

3. A process according to claim 2, characterised in that the said layer with a predetermined path is formed by depositing on the entire surface of said member a layer of the material and by then removing certain parts of the layer by photogravure.

4. A process according to any one of the claims 1 to 3, characterised in that the conductive material is constituted by nickel particles and the aggregate obtained by the simultaneous compression of these nickel particles and the ceramic powder is sintered at a temperature of 1 300 °C.

5. A process according to any one of the claims 1 to 4, characterised in that the ceramic material is an oxygen ion-conducting ceramic material.

6. A process according to claim 5, characterised in that the ceramic material comprises a mixture of conductive ionic oxides.

7. A process according to claim 6, characterised in that the ceramic material is a mixture of zirconium oxide and yttrium oxide.

8. A process according to any one of the claims 1 to 7, characterised in that the electrically conductive material is a metal, an alloy or a compound able to momentarily fix hydrogen.

9. A process according to any one of the claims 1 to 8, characterised in that the particles of the electrically conductive material have a size between 3 and 30 $\mu$.

10. A process according to any one of the claims 1 to 9, characterised in that the powder of the ceramic material has a specific surface at least equal to 50 m²/g.

**Ansprüche**

1. Verfahren zur Herstellung eines Stückes aus Keramik, bei dem auf dessen Oberfläche Einschlüsse eines elektrischen Leitermaterial aufgebracht werden, dadurch gekennzeichnet, daß auf den Boden einer Form eine geringe Menge von Teilchen dieses Materials angeordnet wird, daß darauf das keramische Pulver angeordnet und die aus diesem Pulver und den Teilchen gebildete Gesamtheit zusammengedrückt wird, woraufhin sie bei einer Temperatur unterhalb der Schmelztemperatur des Leitermaterials gesintert wird, wobei die Menge der auf dem Boden der Form angeordneten Teilchen des Leitermaterials derart ist, daß nach dem Sintern ein Stück erhalten wird, welches auf seiner Oberfläche Einschlüsse des elektrischen Leitermaterials aufweist, die unter sich derart vereinigt sind, daß sie auf der Oberfläche des Stückes ein elektrisches Leiternetz bilden.

2. Verfahren zur Herstellung eines Stückes aus Keramik, bei dem auf dessen Oberfläche Einschlüsse aus einem elektrischen Leitermaterial aufgebracht werden, dadurch gekennzeichnet, daß auf dem Boden einer Form eine kleine Menge des Materials angeordnet wird, daß darauf das keramische Pulver angeordnet und die aus diesem Pulver und den Teilchen gebildete Gesamtheit zusammengedrückt wird, woraufhin diese bei einer Temperatur unterhalb der Schmelztemperatur des Leitermaterials gesintert wird, und daß anschließend auf diesem Stück in Berührung mit den Teilchen ein Überzug aus elektrischem Leitermaterial gebildet wird, welcher eine vorbestimmte Bahn darstellt.

3. Verfahren nach Anspruch 2, dadurch gekennzeichnet, daß der eine vorbestimmte Bahn darstellende Überzug dadurch gebildet wird, daß auf der ganzen Oberfläche des Stückes eine Schicht aus dem Material abgelagert wird und anschließend gewisse Bereiche dieser Schicht durch Fotogravure entfernt werden.

4. Verfahren nach einem der Ansprüche 1 bis 3, dadurch gekennzeichnet, daß das Leitermaterial durch Teilchen aus Nickel gebildet wird und daß die durch gleichzeitiges Zusammendrücken der Teilchen aus Nickel und des keramischen Pulvers erhaltene Gesamtheit bei einer Temperatur von 1 300°C gesintert wird.

5. Verfahren nach einem der Ansprüche 1 bis 4, dadurch gekennzeichnet, daß die genannte Keramik eine sauerstoffionenleitende Keramik ist.

6. Verfahren nach Anspruch 5, dadurch gekennzeichnet, daß die genannte Keramik durch eine Mischung von ionenleitenden Oxyden gebildet ist.

7. Anspruch nach Anspruch 6, dadurch gekennzeichnet, daß die genannte Keramik eine Mischung aus Zirkoniumoxyd und Itriumoxyd ist.

8. Verfahren nach einem der Ansprüche 1 bis 7, dadurch gekennzeichnet, daß das elektrische Leitermaterial ein Metall, eine Legierung oder Verbindung ist, welche momentan Wasserstoff anlagern kann.

9. Verfahren nach einem der Ansprüche 1 bis 8, dadurch gekennzeichnet, daß die Teilchen des elektrischen Leitermaterials eine Abmessung zwischen 3 und 30 µm aufweisen.

10. Verfahren nach einem der Ansprüche 1 bis 9, dadurch gekennzeichnet, daß das keramische Pulver eine spezifische Oberfläche von mindestens gleich 50 $m^2/g$ aufweist.

Ni

Zro$_2$

1